(19) Europäisches Patentamt / European Patent Office / Office européen des brevets

(11) **EP 4 554 821 B1**

(12) **EUROPEAN PATENT SPECIFICATION**

(45) Date of publication and mention
of the grant of the patent:
**01.07.2026 Bulletin 2026/27**

(21) Application number: **22744475.9**

(22) Date of filing: **15.07.2022**

(51) International Patent Classification (IPC):
*B60T 8/17* (2006.01)     *B60T 8/1755* (2006.01)
*B60T 8/24* (2006.01)     *B60W 40/114* (2012.01)
*B60W 40/12* (2012.01)

(52) Cooperative Patent Classification (CPC):
**B60T 8/1708; B60T 8/17551; B60T 8/248;
B60W 40/114; B60W 40/12;** B60T 2230/06;
B60W 2300/14

(86) International application number:
**PCT/EP2022/069951**

(87) International publication number:
**WO 2024/012701 (18.01.2024 Gazette 2024/03)**

(54) **DETECTION OF YAW INSTABILITIES IN VEHICLE COMBINATIONS**

ERKENNUNG VON GIERUNTAUGLICHKEITEN IN FAHRZEUGKOMBINATIONEN

DÉTECTION D'INSTABILITÉS DE LACET DANS DES COMBINAISONS DE VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.05.2025 Bulletin 2025/21**

(73) Proprietor: **VOLVO TRUCK CORPORATION
405 08 Göteborg (SE)**

(72) Inventors:
• **ERDINC, Umur
  413 26 Göteborg (SE)**
• **JONASSON, Mats
  433 49 Partille (SE)**
• **JACOBSON, Bengt
  435 38 Mölnlycke (SE)**

(74) Representative: **Ström & Gulliksson AB
P.O. Box 4188
203 13 Malmö (SE)**

(56) References cited:
**EP-A1- 1 038 744      EP-A1- 2 433 839
EP-A1- 2 692 605       WO-A2-2005/005200
US-A1- 2013 085 649    US-A1- 2021 396 620**

**Description**

FIELD

This disclosure relates to detection of unsafe operation in vehicle combinations. In particular, it relates to detection of yaw instabilities for combinations of at least two vehicle units.

BACKGROUND

Multi-unit vehicle combinations are prone to different modes of unsafe operation including jack-knifing, trailer swing, rollover and off-tracking. Two of these, jack-knifing and trailer swing, can be grouped under the umbrella of yaw instabilities, as they are predominantly embodied in the yaw behaviour of the tractor and trailing units of a vehicle combination.

Jack-knifing occurs when the tractor unit of a vehicle combination starts to skid sideways in slippery road conditions and the driver is not able to correct the skidding in time with the proper amount of steering. The trailing unit pushes the tractor unit causing the tractor unit to turn around a vertical axis until it hits the trailing unit. Jack-knifing is one of the major sources of accidents in multi-unit vehicle combinations. Trailer swing occurs when the wheels of the trailing unit slip, for example due to slippery road conditions, while the wheels of the tractor unit do not. In this case, the trailing unit starts to swing around the vertical axis. All types of vehicle combinations are susceptible to such instabilities.

These instabilities can be exacerbated by the presence of propulsive elements, for example motors or braking systems, on the trailing unit. Such elements are used increasingly as electric vehicles become more popular. For example, electric motors may be present on some or all axles of the different units. In some instances, a controller of such a vehicle may activate the electric motors of only one axle or unit in order to propel the vehicle. For example, the controller may activate only the electric motors of a trailing unit if the battery of the tractor unit is emptier or if the tractor unit is a conventional tractor unit and the trailing unit is an electric trailer. Electric axles may also be used to capture energy via regenerative braking. A controller may cause only one axle or unit to perform regenerative braking without braking the other axles or units, for example if the battery of one unit is much emptier than the battery of another unit.

Propelling or braking with only one axle or unit may create the conditions for yaw instabilities more readily than conventional ways of propelling and braking. To avoid such situations, it is important to detect such yaw instabilities either in advance or at an early point of onset.

US 2021/0396620 A1 discloses systems and methods for operating a vehicle comprising a tractor and a trailer attached for pulling behind the tractor. A centre-of-mass system may determine a mass of the trailer and a tractor understeer. The centre-of-mass system may determine the tractor understeer using steering input data describing a steering angle of the tractor and yaw data describing a yaw of the tractor. The centre-of-mass system may determine a load centre-of-mass using the tractor understeer and a mass of the trailer. The centre-of-mass system may further determine that the load centre-of-mass transgresses a centre-of-mass threshold and send an alert message indicating that the load transgresses the load centre-of-mass threshold.

SUMMARY

This disclosure attempts to solve the problems noted above by providing a method of detecting a yaw instability in a vehicle combination. In particular, an understeering gradient of at least one unit of the vehicle combination can be monitored with respect to a threshold to determine if the vehicle combination is operating in a safe manner. The threshold can be set based on a current operating states of the vehicle combination.

The method allows an upcoming or ongoing yaw instability in a vehicle combination to be detected with high accuracy and at an early stage. The understeering gradient of a given unit gives good certainty on whether a jack-knife or trailer swing is taking place. The method only requires monitoring of a single unit, and for a tractor unit does not require any monitoring of the articulation angle, meaning that this finding can be applied to vehicle combinations with trailers lacking sensors. By determining thresholds for safe operation dynamically based on a current operating state of a vehicle combination, a more robust and responsive detection method is provided. In particular, changes in operating conditions that affect the likelihood of a yaw instability occurring, for example vehicle speed, lateral acceleration and road wheel angle, can be taken into account. This ensures that instabilities that might not be captured by a fixed safe operating envelope can be detected properly. In the opposite sense, false detections of instability captured by an inappropriately set safe operating envelope are avoided.

According to an aspect, there is provided a method of detecting a yaw instability in a vehicle combination, the vehicle combination comprising a tractor unit and at least one trailing unit, the method comprising determining a current value of an understeering gradient of at least one unit of the vehicle combination, comparing the current value of the understeering gradient to a threshold, and if the current value of the understeering gradient is beyond the threshold, determining that a yaw instability is present in the vehicle combination.

According to the invention, the understeering gradient of the tractor unit, $K_{us,tractor}$ is given by:

$$K_{us,tractor} = \frac{v_{1,r} \tan \delta_1 - L_1 \omega_1}{V_{1,r}^2 \omega_1}$$

where $v_{1,r}$ is the longitudinal speed of the tractor unit, $\delta_1$ is the road wheel angle of the tractor unit, $L_1$ is the wheelbase of the tractor unit, and $\omega_1$ is the yaw rate of the tractor.

According to the invention, the understeering gradient of a trailing unit $i$, $K_{us,trailer}$ is given by:

$$K_{us,trailer,i} = \frac{v_{i,r} \tan \theta_{i-1,i} - \left( L_i - \frac{b_{i-1}}{\cos \theta_{i-1,i}} \right) \omega_i}{v_{i,r}^2 \omega_i}$$

where $v_{i,r}$ is the longitudinal speed of the trailing unit, $\theta_{i-1,i}$ is the articulation angle between the trailing unit and the unit in front, $L_i$ is the wheelbase of the trailing unit, $b_{i-1}$ is the longitudinal distance from the equivalent rear axle position of the unit to the coupling point, and $\omega_i$ is the yaw rate of the trailing unit.

Optionally, the threshold is determined based on a modelled value of the understeering gradient, $K_{us,i}^{model}$. Optionally, $K_{us,i}^{model}$ is given by:

$$K_{us,i}^{model} = \frac{C_i \cdot l_r - C_{i-1} \cdot l_f^*}{C_i \cdot C_{i-1} \cdot L_i^*}$$

where $C_i$ is the cornering stiffness used for the unit $i$, $C_{i-1}$ is the cornering stiffness used for the unit $i-1$, $l_r$ is the distance from the rear axle to the centre of gravity of the unit, $l_f^*$ is the modified distance from the coupling point to the centre of gravity of the unit and $L_i^*$ is the modified wheelbase of the unit.

Optionally, for a unit with exactly two axle groups, $K_{us,i}^{model}$ is given by:

$$K_{us,i}^{model} = \frac{C_r \cdot l_r - C_f \cdot l_f}{C_f \cdot C_r \cdot L}$$

where $C_r$ is the cornering stiffness for the rear axle of the unit, and $C_f$ is the cornering stiffness for the front axle of the unit.

Optionally, the threshold is a fixed threshold determined based on experimental data and/or a machine learning model. Optionally, the threshold is a variable threshold determined based on a current operating state of the vehicle combination. Optionally, the current operating state of the vehicle combination comprises a longitudinal speed of the vehicle combination, a lateral acceleration of the tractor unit, a lateral acceleration of the trailing unit, a road wheel angle of the tractor unit, a road wheel angle of the trailing unit, a road profile, and/or a road surface friction coefficient.

Optionally, the threshold, $K_{us,i}^{threshold}$, is given by:

$$K_{us,i}^{threshold} = \left( A + B \cdot \min \left( \frac{\mathrm{abs}(v_{ir})}{C}, 1 \right) \right) \cdot K_{us,i}^{model}$$

Optionally, the threshold, $K_{us,i}^{threshold}$, is given by:

$$K_{us,i}^{threshold} = \left( A + B \cdot \min \left( \frac{\mathrm{abs}(a_{y,i})}{C \cdot g}, 1 \right) \right) \cdot K_{us,i}^{model}$$

Optionally, the threshold, $K_{us,i}^{threshold}$, is given by:

$$K_{us,i}^{threshold} = \left( A + B \cdot \min\left( \frac{\text{abs}(\delta_i)}{C}, 1 \right) \right) \cdot K_{us,i}^{model}$$

Optionally, the threshold, $K_{us,i}^{threshold}$, is given by

$$K_{us,i}^{threshold} = \left( A + B \cdot \min\left( \frac{\text{abs}(\gamma)}{C}, 1 \right) \right) \cdot K_{us,i}^{model}$$

Optionally, the threshold, $K_{us,i}^{threshold}$, is given by:

$$K_{us,i}^{threshold} = \left( A + B \cdot min\left( \frac{abs(\mu)}{C}, 1 \right) \right) \cdot K_{us,i}^{model}$$

where A, B and C are constants, $v_{ir}$ is the longitudinal speed of the unit, $a_{y,i}$ is the lateral acceleration of the unit, g is the gravitational acceleration, $\delta_i$ is the road wheel angle, $\gamma$ is the road slope, $\mu$ is the road surface friction coefficient, and $K_{us,i}^{model}$ is a modelled reference value for the understeering gradient of the unit. For example, the constants A, B and C may be determined based on experimental data.

Optionally, the method comprises determining that a jack-knife is present in the vehicle combination if the current value of the understeering gradient of the tractor unit is beyond the threshold. Optionally, the method comprises determining that trailer swing is present in the vehicle combination if the current value of the understeering gradient of the trailing unit is beyond the threshold. Optionally, the method comprises determining that a complete spin out is present in the vehicle combination if the current values of the understeering gradient of the tractor unit and the trailing unit are beyond respective thresholds.

According to another aspect, there is provided computer-readable medium having stored thereon instructions that, when executed by one or more processors cause execution of the method steps.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. Further features of, and advantages with, the present invention will become apparent when studying the appended claims and the following description. The skilled person realizes that modifications may be made without departing from the scope of the present invention, as defined by the appended claims.

BRIEF DESCRIPTION OF THE DRAWINGS

Exemplary embodiments of the disclosure shall now be described with reference to the drawings in which:

FIG. 1 shows an example vehicle combination;
FIG. 2A shows j ack-knifing of a vehicle combination;
FIG. 2B shows trailer swing in a vehicle combination;
FIG. 3 shows an example unit axis system for modelling a vehicle combination;
FIG. 4A shows a generic kinematic model of two units of a vehicle combination;
FIG. 4B shows a kinematic model of a vehicle combination comprising a tractor unit and a trailing unit;
FIG. 5A is a plot of the understeering gradient of the tractor unit for a typical braking case;
FIG. 5B is a plot of the understeering gradient of the tractor unit for a j ack-knife case.
FIG. 6A is a plot of the understeering gradient of the trailing unit for a typical braking case
FIG. 6B is a plot of the understeering gradient of the trailing unit for a trailer swing case.
FIG. 7 a flow chart illustrating a method of detecting a yaw instability in a vehicle combination;
FIG. 8 is a block diagram illustrating an exemplary computer system in which embodiments of the present disclosure may be implemented.

SPECIFIC DESCRIPTION

The invention will now be described more fully hereinafter with reference to the accompanying drawings, in which certain aspects of the invention are shown. The invention may, however, be embodied in many different forms and should not be construed as limited to the embodiments and aspects set forth herein; rather, the embodiments are provided by way of example so that this disclosure will be thorough and complete, and will fully convey the scope of the invention to those skilled in the art. Accordingly, it is to be understood that the present invention is not limited to the embodiments described herein and illustrated in the drawings; rather, the skilled person will recognize that many changes and modifications may be made within the scope of the appended claims. Like reference numerals refer to like elements throughout the description.

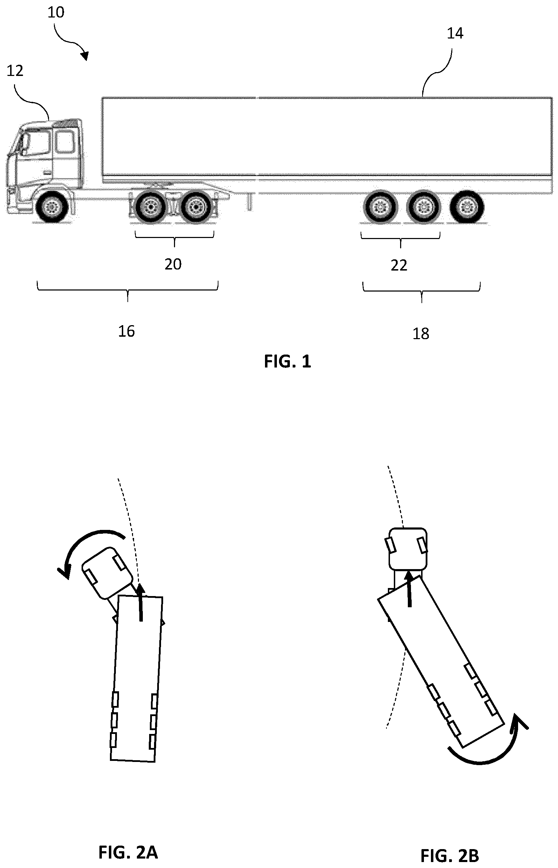

FIG. 1 shows an example vehicle combination 10 of the type considered in this disclosure. The vehicle combination 10 comprises a tractor unit 12 and at least one trailing unit 14. The tractor unit 12 is generally the foremost unit in a vehicle combination, and comprises the cabin for the driver, including steering controls, dashboard displays and the like. Generally, the tractor unit 12 is used to provide propulsion power for the vehicle combination 10. The at least one trailing unit 14 is generally used to store goods that are being transported by the vehicle combination. The at least one trailing unit 14 may be a truck, trailer, dolly and the like. The at least one trailing unit 14 may also provide propulsion to the vehicle combination 10. For example, the trailing unit 14 may comprise one or more electric motors configured to drive one or more axles or individual wheels of the trailing unit 14. A trailing unit 14 without a front axle is known as a semi-trailer.

A vehicle combination 10 may be defined by physical properties of the various units, for example a geometry of each unit and the combination as a whole, a number of axles on each unit, a distance between the axles on each unit, a number of motion support devices (including, for example, electric motors, mechanical service brakes and steering actuators) on each unit, a cornering stiffness on the tyres of each unit, an inertia about a yaw-axis of each unit, an electric motor peak torque output on each unit, an axle load on the axels of each unit.

In the example of FIG. 1, the tractor unit 12 comprises a number of tractor axles 16, and the trailing unit 14 comprises a number of trailer axles 18. At least one of the axles on each unit may be a driven axle, meaning that it is coupled to a propulsion system to drive the vehicle combination 10 forward. The propulsion systems may include traditional propulsion systems coupled to driven axles of the tractor unit 12, and/or electric motors coupled to driven axles of the tractor unit 12 or the trailing unit 14. For example, the three tractor axles 16 may comprise two driven tractor axles 20, and the three trailer axles 18 may comprise two driven trailer axles 22. A unit may be designated by the combination of axles present. In the example of FIG. 1, the vehicle combination 10 comprises a "6x4" tractor unit 12 and a "6x4" trailing unit 14, meaning each unit has six wheels, four of which are driven.

Whilst three tractor axles 16 and three trailer axles 18 are shown, it will be appreciated that any suitable number of axles may be provide on the tractor unit 12 and the at least one trailing unit 14. It will also be appreciated that any number of the tractor axles 16 and/or trailer axles 18 may be driven axles, including zero (i.e. one of the units may include at least one driven axle while the other does not). Furthermore, further trailing units 14 may be provided connected to each other. This gives rise to different types and designations of vehicle combinations.

In order to detect yaw instabilities, proper definitions the unsafe behaviour modes are required. The unsafe behaviour modes that are considered as yaw instabilities are in FIG.s 2A and 2B. FIG. 2A shows jack-knifing the wheels of the tractor unit 12 slipping. In particular, the wheels on the two rear axles of the tractor unit 12 slip while the wheels on the trailing unit 14 do not slip, causing a jack-knife. FIG. 2B shows trailer swing due to the wheels of the trailing unit 14 slipping. In particular, the wheels on the trailing unit 14 slip while the wheels on the tractor unit 12 do not slip, causing trailer swing. An unsafe mode where both jack-knifing and trailer swing occur may be known as a complete spin out.

FIG.s 3 and 4 show examples of how the dynamics of a vehicle combination 10 can be modelled. In order to describe motion and dynamics of the different vehicle units a definition of coordinate systems and global forces acting on them is required. For this, the international standard for road vehicles ISO 8855 is used.

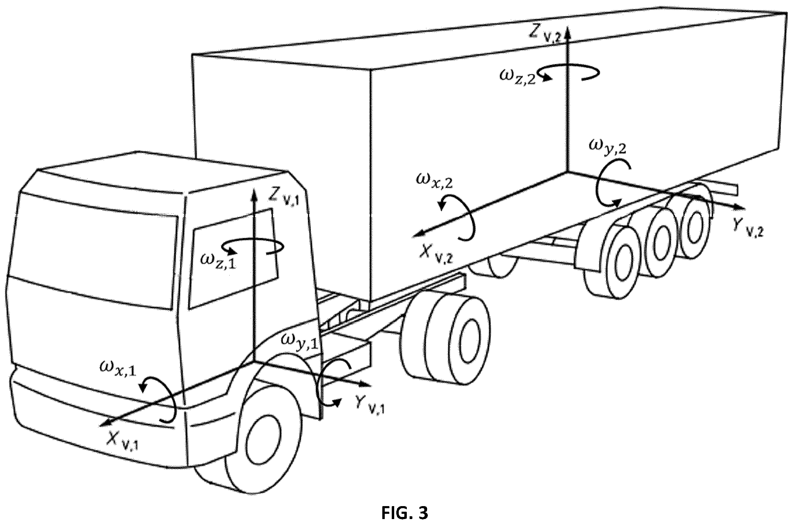

As shown in FIG. 3, $X_{V,i}$, $Y_{V,i}$ and $Z_{V,i}$ are the unit axis systems where $i \in \{1, 2, ... n\}$, with the tractor unit 12 being unit number 1, and trailing units 14 getting increasingly higher numbers. Whilst only one trailing unit 14 is shown, it will be appreciated that further trailing units may be present in the vehicle combination 10. $n$ is the total number of units of the vehicle combination 10. The rate of deviation around each axis is given by $\omega$. The yaw rate of each unit is its rate of deviation about the Z axis, denoted $\omega_{z,i}$. In the remainder of this disclosure, the yaw rate of a unit will be simply denoted $\omega_i$.

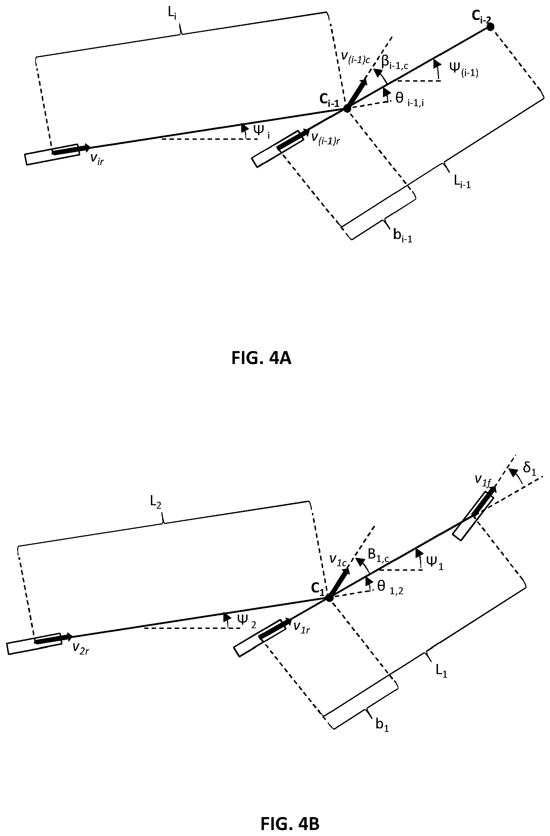

Parameters and dimensions are defined per unit $i$ on the vehicle combination 10, as shown in FIG.s 4A and 4B. FIG. 4A is a generic kinematic model of two units $i-1$ and $i$ of a vehicle combination 10. Each unit has a wheelbase $L_i$. The coupling point between units $i-1$ and $i$ is denoted $C_{i-1}$. A distance between a rear axle of a unit $i-1$ and the coupling point to the unit $i$ is denoted $b_{i-1}$. Note that point $C_{i-2}$ is the front axle of tractor in the case that i=2.

The angle between the longitudinal axes of consecutive units is known as the articulation angle $\theta$. In particular, the articulation angle $\theta$ between units $i$ and $i+1$ is given by $\theta_{i,i+1}$ (i.e. the articulation angle $\theta$ between the tractor unit 12 and the first trailing unit 14 is denoted $\theta_{1,2}$). The rate of change of the articulation angle, known as the articulation angular rate, is denoted by $\dot{\theta}$. The yaw angle of a unit is denoted $\psi_i$. The sideslip angle of a unit is denoted $\beta_i$. $\beta_{i-1,c}$ is the sideslip angle of unit $i-1$ at the coupling point. The longitudinal velocity of a unit is taken from a rear axle of the unit and is denoted $v_{ir}$. The

units have a road wheel angle $\delta_i$ (shown in FIG. 4B) which is the angle between the direction of the wheels and the longitudinal direction of the unit.

In FIG.4B, a kinematic model of a vehicle combination 10 comprising a tractor unit 12 and a trailing unit 14 is shown. The tractor unit has wheelbase $L_1$ and the trailing unit 14 has wheelbase $L_2$. The tractor unit 12 and the trailing unit 14 are connected via a moment free articulation point $C_1$. The distance from the rear axle of the tractor unit 12 to the coupling point $C_1$ is denoted as $b_1$. The tractor unit 12 has a front axle velocity denoted $v_{if}$. The other parameters are given the appropriate subscripts as discussed above. The front axle of the tractor unit 14 is steered with a road wheel angle $\delta$, which is determined by the steering controls of the tractor unit 14.

The vehicle is modelled as a single-track model, i.e., left and right wheels on a given axle are considered together. The real units can have axle groups with several axles, but in the model they are considered together, i.e., the tractor unit 14 is modelled with only one front and one rear wheel and the trailing unit 14 is modelled with only one wheel. The tyres are modelled with no tyre slip, which means that the tyre velocity vectors $v_{1r}$, $v_{1f}$ and $v_{2r}$ are directed along the centreline of the tyres.

The inventors have determined that the yaw instabilities shown in FIG.s 2A and 2B start with oversteering and can therefore be described by the time response of the understeering gradient of the units of the vehicle combination. Examples of these time responses are shown in FIG.s 5 and 6. The time responses are based on real tests of a vehicle combination 10 comprising a tractor unit 12 and a trailing unit 14. The vehicle combination 10 is protected against a severe jack knife by means of a jack-knife protection cable connected between the tractor unit 12 and the trailing unit 14. The jack-knife protection cables allow maximum of 60° articulation angle, at which point the cable tightens and prevents a catastrophic jack-knife.

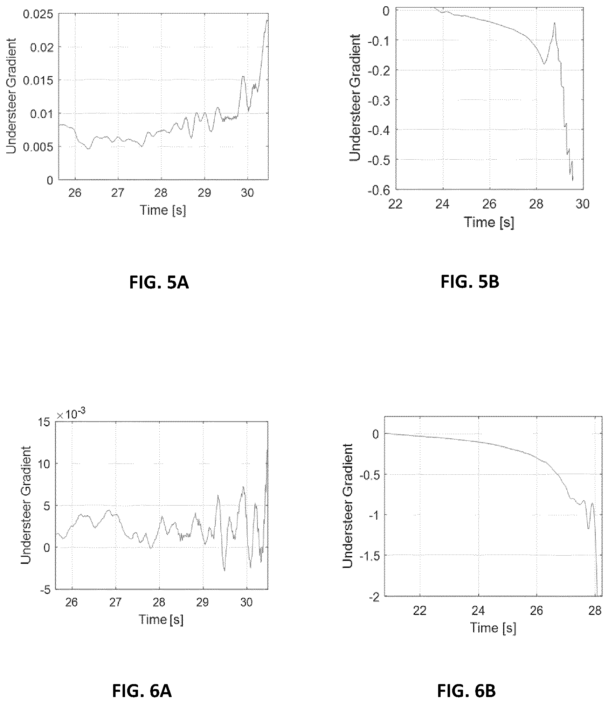

FIG. 5A is a plot of the understeering gradient $K_{us}$ of the tractor unit 12 for a typical braking case. The plot is shown up until the time at which the speed of the vehicle combination 10 decreases to 4 m/s. Typically, the understeering gradient $K_{us}$ is positive, which means that the tractor unit 12 is designed to be slightly understeered. For the modelled vehicle combination, the understeering gradient $K_{us}$ is of the order of magnitude of 0.01, with some minor fluctuations as the vehicle brakes.

FIG. 5B is a plot of the understeering gradient $K_{us}$ of the tractor unit 12 for a jack-knife case. The plot is shown up until the time at which braking applied by the on-board computer is stopped. As can be seen, the time response is significantly different from that for the typical braking case shown in FIG. 5A. In particular, the understeering gradient $K_{us}$ grows quickly in a negative direction, meaning that the tractor unit 12 is oversteered. The peak at 28.5 seconds is the point at which the jack.-knife cable tightens. As discussed above, the inventors have determined that yaw instabilities start with oversteering. Therefore, the understeering gradient $K_{us}$ of the tractor unit 12 is a particularly good indicator of a jack-knife. This does not require any monitoring of the trailing unit 14 or the articulation angle $\theta_{1,2}$, meaning that this finding can be applied to vehicle combinations with trailers lacking sensors.

FIG. 6A is a plot of the understeering gradient $K_{us}$ of the trailing unit 14 for a typical braking case. The plot is shown up until the time at which the speed of the vehicle combination 10 decreases to 4 m/s. Typically, the understeering gradient $K_{us}$ is mostly positive, and of the order of magnitude of 0.005, with some minor fluctuations as the vehicle brakes.

FIG. 6B is a plot of the understeering gradient $K_{us}$ of the trailing unit 14 for a trailer swing case. The plot is shown for an initial period of braking. As can be seen, the time response is significantly different from that for the typical braking case shown in FIG. 5A. In particular, the understeering gradient $K_{us}$ grows quickly in a negative direction, meaning that the trailing unit 14 is oversteered. In fact, it has been found that the understeering gradient $K_{us}$ of the trailing unit 14 tends towards negative infinity when the trailing unit 14 corrects itself and the yaw rate becomes zero. As discussed above, the inventors have determined that yaw instabilities start with oversteering. Therefore, the understeering gradient $K_{us}$ of the trailing unit 14 is a particularly good indicator of trailer swing. This does not require any monitoring of the tractor unit 12. It is noted that understeering gradient is normally defined for tractor units but not trailing units. Therefore, consideration of the understeering gradient of the trailing unit 14 is in itself a new concept.

With this in mind, a method is proposed in which an understeering gradient of at least one unit of the vehicle combination 10 is monitored with respect to certain limits to determine if the vehicle combination 10 is operating in a safe manner. In particular, thresholds for the understeering gradient of different units can be used to determine whether the vehicle combination 10 is operating safely. The thresholds can be fixed or a function of a current operating state of the vehicle combination.

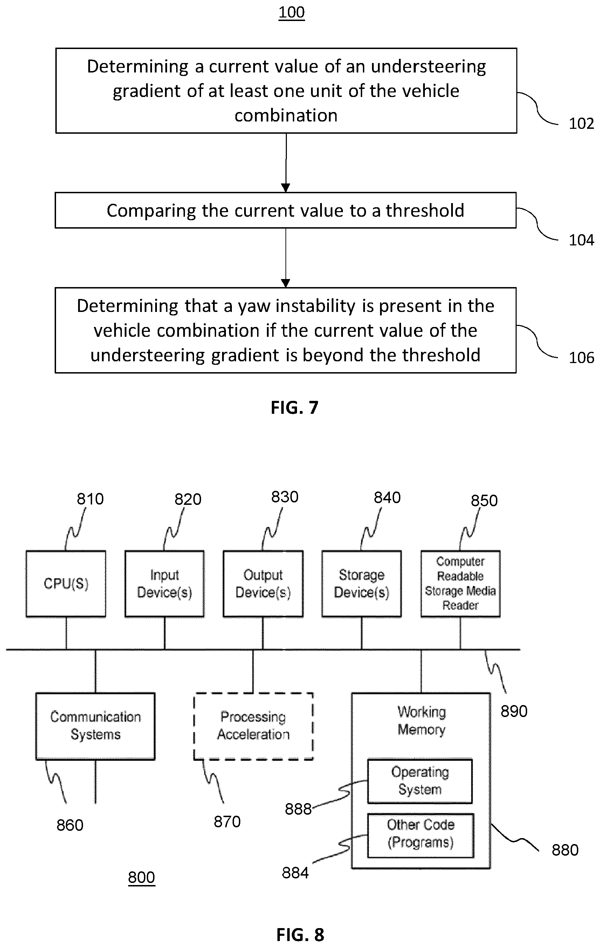

FIG. 7 is a flow chart illustrating a method 100 of detecting a yaw instability in a vehicle combination, such as the vehicle combination 10, comprising a tractor unit 12 and at least one trailing unit 14.

The method 100 comprises, at step 102, determining a current value of an understeering gradient of at least one unit of the vehicle combination is determined. The current value of the understeering gradient describes whether a particular unit is oversteered or understeered. The current value of the understeering gradient can be determined in a number of ways.

For example, the understeering gradient of the tractor unit 12, $K_{us,tractor}$, can be given by:

$$K_{us,tractor} = \frac{v_{1,r}\tan\delta_1 - L_1\omega_1}{v_{1,r}^2\omega_1}$$

It is noted that the longitudinal speed $v_{1r}$ of the vehicle combination 10 is taken from a rear axle of the tractor unit 12, as it moves along the longitudinal axis of the vehicle combination 10, whereas the front axle is steered with the road wheel angle $\delta$, and so is not precisely equal to the longitudinal speed of the vehicle combination 10.

The understeering gradient is mostly similar to tractor understeering, but the road wheel angle $\delta$ is replaced with the articulation angle $\theta$ between the trailing unit and the unit in front. For trailing unit $i$, this is denoted $\theta_{i-1,i}$. The understeering gradient of a trailing unit 14, $K_{us,trailer}$, can then be given by:

$$K_{us,trailer,i} = \frac{v_{i,r}\tan\theta_{i-1,i} - \left(L_i - \frac{b_{i-1}}{\cos\theta_{i-1,i}}\right)\omega_i}{v_{i,r}^2\omega_i}$$

At step 104, the current value of the understeering gradient is compared to a threshold, $K_{us}^{threshold}$. The threshold may be a fixed threshold, determined for example based on model or experimental data as discussed above, or a variable threshold, determined for example based on the current operating state of the vehicle combination 10.

To determine a fixed threshold, experimental or model data relating to a vehicle combination 10 can be used to determine safe and unsafe operating conditions. This can be done using real tests, computer model simulations, a machine learning model, or other suitable means known in the art. In some examples, the fixed threshold can be set at zero, meaning that the threshold is met as soon as any oversteer is detected.

In some examples, a fixed threshold can be set as a factor of a modelled value $K_{us,i}^{model}$, e.g. $0.7K_{us,i}^{model}$. The factor can be determined based on experimental or model data. Normally, the modelled value $K_{us,i}^{model}$ is a fixed value and defined for the linear range of the tyres. The modelled value $K_{us,i}^{model}$ for a unit can be given by:

$$K_{us,i}^{model} = \frac{C_i \cdot l_r - C_{i-1} \cdot l_f^*}{C_i \cdot C_{i-1} \cdot L_i^*}$$

where $C_i$ is the cornering stiffness used for the unit $i$, $C_{i-1}$ is the cornering stiffness used for the unit $i-1$, $l_r$ is the distance from the rear axle to the centre of gravity of the unit, $l_f^*$ is the modified distance from the coupling point to the centre of gravity of the unit and $L_i^*$ is the modified wheelbase of the unit. Taking $L_i$ as the wheelbase of the unit (given by $l_f + l_r$ the distances from the front and rear axles to the centre of gravity of the unit respectively), $L_i^* = L_i - \frac{b}{\cos\theta_{i-1,i}}$ and $l_f^* = l_f - \frac{b}{\cos\theta_{i-1,i}}$.

For units having a single axle, the cornering stiffness $C_i$ (and $C_{i-1}$, etc.) is the cornering stiffness for that axle. A unit may have multiple axles that can be grouped together as front or rear groups. For units having more than one axle in a front or rear group, the axles in the group are considered together as a single axle and the cornering stiffness $C_i$ is the cornering stiffness for that group. If a unit has more than one group, the cornering stiffness for the rear group (axle) is used.

If a unit has exactly two axle groups, the modelled value $K_{us,i}^{model}$ for the unit can be given by.

$$K_{us,i}^{model} = \frac{C_r \cdot l_r - C_f \cdot l_f}{C_f \cdot C_r \cdot L}$$

where $C_r$ is the cornering stiffness for the rear axle of the unit, and $C_f$ is the cornering stiffness for the front axle of the unit.

The load distribution can also be taken into account. Typically, the cornering stiffness is given by:

$$C = C_C F_z$$

where $C_C$ is the normalized cornering stiffness with respect to a load (different tyres may have different values of $C_C$) and $F_z$ is the normal load on the axle or wheel. So, in the equation above, the cornering stiffness $C_i$ already takes the load into account. If an axle has double the load with the same tires, it will have double the cornering stiffness. Put otherwise, the cornering stiffness increases linearly with load on the axle. This means that an axle with a heavier load can generate a larger lateral force $F_y$, since:

$$F_y = C\beta$$

where $\beta$ is the sideslip angle. As such, the cornering stiffness describes how much force (a tyre can generate per radian of sideslip angle.

The load distribution will therefore affect $C_i$, $l_f$ and $l_r$ (the position of the centre of gravity will change). Therefore, the load distribution can dramatically affect the understeer of a unit.

The modelled value $K_{us}^{model}$ described above is based on the tyre model disclosed in the Vehicle Dynamics Compendium from Bengt Jacobson et al, Vehicle Dynamics Group, Division Vehicle and Autonomous Systems, Department of Mechanics and Maritime, Chalmers University of Technology, www.chalmers.se. This also allows forces and sideslip to be taken into account, giving a more robust model.

To determine a variable threshold based on the current operating state of the vehicle combination 10, experimental or model data relating to a vehicle combination 10 can be used to determine safe and unsafe operating conditions as the operating state of the vehicle combination 10 changes. This can be done using real tests, computer model simulations, a machine learning model, or other suitable means known in the art. For example, a number of manoeuvres can be logged both with and without yaw instabilities. These can be performed with many different speeds, lateral accelerations, frictions, slopes, load distributions, road wheel angles, etc. These can then be evaluated and the thresholds can be tuned, if possible as a function of vehicle states and/or environmental variables. Alternatively, a machine learning model can be trained to tune the thresholds.

The threshold can vary with vehicle states such as longitudinal speed $v_{1r}$ of the vehicle combination 10, lateral acceleration $a_y$ of the tractor unit 12 and/or the at least one trailing unit 14, and road wheel angle $\delta$ of the tractor unit 12, a road profile, and/or a road surface friction coefficient $\mu$.

For example, for longitudinal speed, the threshold, $K_{us,i}^{threshold}$, can be given by:

$$K_{us,i}^{threshold} = \left(A + B \cdot \min\left(\frac{\text{abs}(v_{ir})}{C}, 1\right)\right) \cdot K_{us,i}^{model}$$

where A is the ratio of $K_{us,i}^{model}$ at zero speed, and A+B is the ratio for speed C. The value of B can be set as positive or negative dependent on how much oversteering should be allowed for high or low speeds. For example, if tests or models show that a certain amount of oversteering can be present at high speed without instability, but the same amount of oversteering does cause instability at low speed, the limit can be set differently for different speeds. At speeds larger than C, the minimum function should be removed.

For lateral acceleration, the threshold, $K_{us}^{threshold}$, can be given by:

$$K_{us,i}^{threshold} = \left(A + B \cdot \min\left(\frac{\text{abs}(a_{y,i})}{C \cdot g}, 1\right)\right) \cdot K_{us,i}^{model}$$

where A, B and C are constants, $a_{y,i}$ is the lateral acceleration of the unit, and g is the gravitational acceleration. In particular, A is the ratio of $K_{us,i}^{model}$ to be used with zero lateral acceleration, and A+B is the ratio for a lateral acceleration C*g. The value of B can be set as positive or negative dependent on how much oversteering should be allowed for high or low lateral acceleration. C it set corresponding to a maximum realistic lateral acceleration. It is noted that the maximum realistic lateral acceleration for heavy vehicles is typically between *0. 3g* and *0.4g*.

The constants A and B may be determined based on experimental or model data. For example, for lower lateral accelerations, the threshold can be set at a maximum of 70% of the value $K_{us,i}^{model}$, meaning A is set at 0.7. For 0.4g, the threshold can be set of 50% of the value $K_{us,i}^{model}$, meaning B is set at 0.2. The threshold, $K_{us,i}^{threshold}$, can therefore be given by:

$$K_{us,i}^{treshold} = \left( 0.7 - 0.2 \cdot \min\left( \frac{\text{abs}(a_{y,i})}{0.4 \cdot g}, 1 \right) \right) \cdot K_{us,i}^{model}$$

This means that for lower lateral accelerations, more oversteering is allowed. The constants A and B can be adjusted based on how much oversteering is allowed for different lateral accelerations. For example, B could be set as positive if less oversteering is to be allowed for high lateral accelerations.

When calculating the threshold, $K_{us,i}^{threshold}$, for a given unit, the lateral acceleration, $a_y$, may be that of the same unit, or of another unit. For example, it may be advantageous to use the lateral acceleration of a stable unit to detect an instability at the other unit. It may also be advantageous to use the lateral acceleration of the unit having the instability when the instability started. For example, it can be assumed that there is no instability before braking, and so the lateral acceleration of the unit when braking started can be taken. Another alternative is to use the steady state lateral acceleration, $a_{y,ss,i}$, which can be given by:

$$a_{y,ss,i} = \frac{v_{i,r}^2}{R}$$

where R is the turning radius.

For road wheel angle, the threshold, $K_{us,i}^{threshold}$, can be given by:

$$K_{us,i}^{threshold} = \left( A + B \cdot \min\left( \frac{\text{abs}(\delta_i)}{C}, 1 \right) \right) \cdot K_{us,i}^{model}$$

where A is the ratio of $K_{us,i}^{model}$ at zero road wheel angle, and A+B is the ratio for road wheel angle C. The value of B can be set as positive or negative dependent on how much oversteering should be allowed for high or low road wheel angle.

For road profile, the threshold, $K_{us,i}^{threshold}$, can be given by:

$$K_{us,i}^{threshold} = \left( A + B \cdot \min\left( \frac{\text{abs}(\gamma)}{C}, 1 \right) \right) \cdot K_{us,i}^{model}$$

where A is the ratio of $K_{us,i}^{model}$ at zero road slope, and A+B is the ratio for road slope C. The value of B can be set as positive or negative dependent on how much oversteering should be allowed for high or low road slope.

For road surface friction coefficient, the threshold, $K_{us,i}^{threshold}$, can be given by:

$$K_{us,i}^{threshold} = \left( A + B \cdot min\left( \frac{abs(\mu)}{C}, 1 \right) \right) \cdot K_{us,i}^{model}$$

where A is the ratio of $K_{us,i}^{model}$ at zero road surface friction coefficient, and A+B is the ratio for road surface friction coefficient C. The value of B can be set as positive or negative dependent on how much oversteering should be allowed for high or low road surface friction coefficient.

By determining thresholds for safe operation dynamically based on a current operating state of a vehicle combination, a more robust and responsive detection method is provided. In particular, changes in operating conditions that affect the likelihood of a yaw instability occurring, for example vehicle speed and road wheel angle, can be taken into account. This ensures that instabilities that might not be captured by a fixed safe operating envelope can be detected properly. In the opposite sense, false detections of instability captured by an inappropriately set safe operating envelope are avoided.

Returning to FIG. 7, at step 106, if the current value of the understeering gradient is beyond the threshold, it is determined that a yaw instability is present in the vehicle combination. As shown in FIG.s 5 and 6, under normal braking conditions the understeering gradient is usually positive, whereas it tends to a significant negative value when a yaw instability is present. Therefore, the threshold can be set at a negative value, and a yaw instability can be detected when it drops below the threshold. If the current value is above the threshold, then it is determined that the vehicle combination 10 is operating safely. Therefore, to detect an upcoming or ongoing yaw instability, one can simply monitor the understeering gradient relative to the threshold.

Dependent on which unit is monitored, different modes of yaw instability can be determined. For example, if the current value of the understeering gradient of the tractor unit 12 is beyond the threshold, it can be determined that a jack-knife is present in the vehicle combination 10. Similarly, if the current value of the understeering gradient of the trailing unit 14 is beyond the threshold, it can be determined that trailer swing is present in the vehicle combination 10. Where values from both types of unit are used, a complete spin out can be detected.

The method 100 allows an upcoming or ongoing yaw instability in a vehicle combination to be detected with high accuracy and at an early stage. The understeering gradient of a given unit gives good certainty on whether a jack-knife or trailer swing is taking place. By determining a threshold for the understeering gradient dynamically, based on a current operating state of the vehicle combination, a more robust and responsive detection method is provided.

FIG. 8 is a block diagram illustrating an exemplary computer system 800 in which embodiments of the present disclosure may be implemented. This example illustrates a computer system 800 such as may be used, in whole, in part, or with various modifications, to provide the functions of the disclosed system. For example, various functions may be controlled by the computer system 800, including, merely by way of example, simulating, determining, classifying, receiving, etc.

The computer system 800 is shown comprising hardware elements that may be electrically coupled via a bus 890. The hardware elements may include one or more central processing units 810, one or more input devices 820 (e.g., a mouse, a keyboard, etc.), and one or more output devices 830 (e.g., a display device, a printer, etc.). The computer system 800 may also include one or more storage devices 840. By way of example, the storage devices 840 may be disk drives, optical storage devices, solid-state storage device such as a random-access memory ("RAM") and/or a read-only memory ("ROM"), which can be programmable, flash-updateable and/or the like.

The computer system 800 may additionally include a computer-readable storage media reader 850, a communications system 860 (e.g., a modem, a network card (wireless or wired), an infrared communication device, Bluetooth™ device, cellular communication device, etc.), and a working memory 880, which may include RAM and ROM devices as described above. In some embodiments, the computer system 800 may also include a processing acceleration unit 870, which can include a digital signal processor, a special-purpose processor and/or the like.

The computer-readable storage media reader 850 can further be connected to a computer-readable storage medium, together (and, optionally, in combination with the storage devices 840) comprehensively representing remote, local, fixed, and/or removable storage devices plus storage media for temporarily and/or more permanently containing computer-readable information. The communications system 860 may permit data to be exchanged with a network, system, computer and/or other component described above.

The computer system 800 may also comprise software elements, shown as being currently located within the working memory 880, including an operating system 888 and/or other code 884. It should be appreciated that alternative embodiments of a computer system 800 may have numerous variations from that described above. For example, customised hardware might also be used and/or particular elements might be implemented in hardware, software (including portable software, such as applets), or both. Furthermore, connection to other computing devices such as network input/output and data acquisition devices may also occur.

Software of the computer system 800 may include code 884 for implementing any or all of the function of the various elements of the architecture as described herein. For example, software, stored on and/or executed by a computer system such as the system 800, can provide the functions of the disclosed system. Methods implementable by software on some of these components have been discussed above in more detail.

## Claims

1. A method (100) of detecting a yaw instability in a vehicle combination (10), the vehicle combination comprising a tractor unit (12) and at least one trailing unit (14), the method comprising:

   determining (102) a current value of an understeering gradient of at least one unit of the vehicle combination;
   comparing (104) the current value of the understeering gradient to a threshold;
   and
   if the current value of the understeering gradient is beyond the threshold, determining (106) that a yaw instability is present in the vehicle combination;
   wherein the understeering gradient of the tractor unit, $K_{us,tractor}$ is given by:

$$K_{us,tractor} = \frac{v_{1,r} \tan \delta_1 - L_1 \omega_1}{V_{1,r}^2 \omega_1}$$

where $v_{1,r}$ is the longitudinal speed of the tractor unit, $\delta_1$ is the road wheel angle of the tractor unit, $L_1$ is the wheelbase of the tractor unit, and $\omega_1$ is the yaw rate of the tractor; and/or.
the understeering gradient of a trailing unit $i$, $K_{us,trailer}$ is given by:

$$K_{us,trailer,i} = \frac{v_{i,r} \tan \theta_{i-1,i} - \left(L_i - \frac{b_{i-1}}{\cos \theta_{i-1,i}}\right) \omega_i}{v_{i,r}^2 \omega_i}$$

where $v_{i,r}$ is the longitudinal speed of the trailing unit, $\theta_{i-1,i}$ is the articulation angle between the trailing unit and the unit in front, $L_i$ is the wheelbase of the trailing unit, $b_{i-1}$ is the longitudinal distance from the equivalent rear axle position of the unit to the coupling point, and $\omega_i$ is the yaw rate of the trailing unit.

2. The method (100) of any preceding claim, wherein the threshold is determined based on a modelled value of the understeering gradient, $K_{us,i}^{model}$.

3. The method (100) of claim 2, wherein $K_{us,i}^{model}$ is given by:

$$K_{us,i}^{model} = \frac{C_i \cdot l_r - C_{i-1} \cdot l_f^*}{C_i \cdot C_{i-1} \cdot L_i^*}$$

where $C_i$ is the cornering stiffness used for the unit $i$, $C_{i-1}$ is the cornering stiffness used for the unit $i-1$, $l_r$ is the distance from the rear axle to the centre of gravity of the unit, $l_f^*$ is the modified distance from the coupling point to the centre of gravity of the unit and $L_i^*$ is the modified wheelbase of the unit.

4. The method (100) of claim 2, wherein, for a unit with exactly two axle groups, $K_{us,i}^{model}$ is given by:

$$K_{us,i}^{model} = \frac{C_r \cdot l_r - C_f \cdot l_f}{C_f \cdot C_r \cdot L}$$

where $C_r$ is the cornering stiffness for the rear axle of the unit, $C_f$ is the cornering stiffness for the front axle of the unit, $l_r$ is the distance from the rear axle to the centre of gravity of the unit, and $l_f$ is the distance from the front axle to the centre of gravity of the unit.

5. The method (100) of any preceding claim, wherein the threshold is a fixed threshold determined based on experimental data and/or a machine learning model.

6. The method (100) of any preceding claim, wherein the threshold is a variable threshold determined based on a current operating state of the vehicle combination (10).

7. The method (100) of claim 6, wherein the current operating state of the vehicle combination (10) comprises a longitudinal speed of the vehicle combination, a lateral acceleration of the tractor unit (12), a lateral acceleration of the trailing unit (14), a road wheel angle of the tractor unit, a road wheel angle of the trailing unit, a road profile, and/or a road surface friction coefficient.

8. The method (100) of claim 6 or 7, wherein the threshold, $K_{us,i}^{threshold}$, is given by:

$$K_{us,i}^{threshold} = \left( A + B \cdot \min\left( \frac{\text{abs}(v_{ir})}{C}, 1 \right) \right) \cdot K_{us,i}^{model}$$

where A, B and C are constants, $v_{ir}$ is the longitudinal speed of the unit, and $K_{us,i}^{model}$ is a modelled reference value for the understeering gradient of the unit.

9. The method (100) of claim 6 or 7, wherein the threshold, $K_{us,i}^{threshold}$, is given by:

$$K_{us,i}^{threshold} = \left( A + B \cdot \min\left( \frac{\text{abs}(a_{y,i})}{C \cdot g}, 1 \right) \right) \cdot K_{us,i}^{model}$$

where A, B and C are constants, $a_{y,i}$ is the lateral acceleration of the unit, g is the gravitational acceleration, and $K_{us,i}^{model}$ is a modelled reference value for the understeering gradient of the unit.

10. The method (100) of claim 6 or 7, wherein the threshold, $K_{us,i}^{threshold}$, is given by:

$$K_{us,i}^{threshold} = \left( A + B \cdot \min\left( \frac{\text{abs}(\delta_i)}{C}, 1 \right) \right) \cdot K_{us,i}^{model}$$

where A, B and C are constants, $\delta_i$ is the road wheel angle, and $K_{us,i}^{model}$ is a modelled reference value for the understeering gradient of the unit.

11. The method (100) of claim 6 or 7, wherein the threshold, $K_{us,i}^{threshold}$, is given by

$$K_{us,i}^{threshold} = \left( A + B \cdot \min\left( \frac{\text{abs}(\gamma)}{C}, 1 \right) \right) \cdot K_{us,i}^{model}$$

where A, B and C are constants, $\gamma$ is the road slope, and $K_{us,i}^{model}$ is a modelled reference value for the understeering gradient of the unit.

12. The method (100) of claim 6 or 7, wherein the threshold, $K_{us,i}^{threshold}$, is given by:

$$K_{us,i}^{threshold} = \left( A + B \cdot min\left( \frac{abs(\mu)}{C}, 1 \right) \right) \cdot K_{us,i}^{model}$$

where A, B and C are constants, $\mu$ is the road surface friction coefficient, and $K_{us,i}^{model}$ is a modelled reference value for the understeering gradient of the unit.

13. The method (100) of any preceding claim, comprising determining that a jack-knife is present in the vehicle combination (10) if the current value of the understeering gradient of the tractor unit (12) is beyond the threshold.

14. The method (100) of any preceding claim, comprising determining that trailer swing is present in the vehicle combination (10) if the current value of the understeering gradient of the trailing unit (14) is beyond the threshold.

15. A computer-readable medium having stored thereon instructions that, when executed by one or more processors cause execution of the method steps according to any of claims 1 to 14.

**Patentansprüche**

1. Verfahren (100) zum Detektieren einer Gierinstabilität in einer Fahrzeugkombination (10), wobei die Fahrzeugkombination eine Zugfahrzeugeinheit (12) und mindestens eine nachlaufende Einheit (14) umfasst, wobei das Verfahren umfasst:

   Bestimmen (102) eines aktuellen Werts eines Untersteuergradienten von mindestens einer Einheit der Fahrzeugkombination;
   Vergleichen (104) des aktuellen Werts des Untersteuergradienten mit einem Schwellenwert; und
   falls der aktuelle Wert des Untersteuergradienten jenseits des Schwellenwerts liegt, Bestimmen (106), dass eine Gierinstabilität in der Fahrzeugkombination vorhanden ist;
   wobei der Untersteuergradient der Zugfahrzeugeinheit $K_{us,tractor}$ gegeben ist durch:

   $$K_{us,tractor} = \frac{v_{1,r} \tan \delta_1 - L_1 \omega_1}{v_{1,r}^2 \omega_1}$$

   wobei $v_{1,r}$ die Längsgeschwindigkeit der Zugfahrzeugeinheit ist, $\delta_1$ der Straßenradwinkel der Zugfahrzeugeinheit ist, $L_1$ der Radstand der Zugfahrzeugeinheit ist, und $\omega_1$ die Gierrate der Zugmaschine ist; und/oder.
   der Untersteuergradient einer nachlaufenden Einheit i, $K_{us,trailer}$ gegeben ist durch:

   $$K_{us,trailer,i} = \frac{v_{i,r} \tan \theta_{i-1,i} - \left( L_i - \frac{b_{i-1}}{\cos \theta_{i-1,i}} \right) \omega_i}{v_{i,r}^2 \omega_i}$$

   wobei $v_{i,r}$ die Längsgeschwindigkeit der nachlaufenden Einheit ist, $\theta_{i-1,i}$ der Gelenkwinkel zwischen der nachlaufenden Einheit und der Einheit davor ist, $L_i$ der Radstand der nachlaufenden Einheit ist, $b_{i-1}$ der Längsabstand von der äquivalenten Hinterachsposition der Einheit zu dem Kopplungspunkt ist, und $\omega_i$ die Gierrate der nachlaufenden Einheit ist.

2. Verfahren (100) nach einem vorhergehenden Anspruch, wobei der Schwellenwert basierend auf einem modellierten Wert des Untersteuergradienten, $K_{us,i}^{model}$ bestimmt wird.

3. Verfahren (100) nach Anspruch 2, wobei $K_{us,i}^{model}$ gegeben ist durch:

   $$K_{us,i}^{model} = \frac{C_i \cdot l_r - C_{i-1} \cdot l_f^*}{C_i \cdot C_{i-1} \cdot L_i^*}$$

   wobei $C_i$ die für die Einheit i verwendete Schräglaufsteifigkeit ist, $C_{i-1}$ die für die Einheit $i\text{-}1$ verwendete Schräglaufsteifigkeit ist, $l_r$ der Abstand von der Hinterachse zu dem Schwerpunkt der Einheit ist, $l_f^*$ der modifizierte Abstand von dem Kopplungspunkt zu dem Schwerpunkt der Einheit ist und $L_i^*$ der modifizierte Radstand der Einheit ist.

4. Verfahren (100) nach Anspruch 2, wobei, für eine Einheit mit genau zwei Achsgruppen, $K_{us,i}^{model}$ gegeben ist durch:

   $$K_{us,i}^{model} = \frac{C_r \cdot l_r - C_f \cdot l_f}{C_f \cdot C_r \cdot L}$$

   wobei $C_r$ die Schräglaufsteifigkeit für die Hinterachse der Einheit ist, $C_f$ die Schräglaufsteifigkeit für die Vorderachse der Einheit ist, $l_r$ der Abstand von der Hinterachse zu dem Schwerpunkt der Einheit ist, und $l_f$ der Abstand von der

13

Vorderachse zu dem Schwerpunkt der Einheit ist.

**5.** Verfahren (100) nach einem vorhergehenden Anspruch, wobei der Schwellenwert ein fester Schwellenwert ist, der basierend auf experimentellen Daten und/oder einem Maschinenlernmodell bestimmt wird.

**6.** Verfahren (100) nach einem vorhergehenden Anspruch, wobei der Schwellenwert ein variabler Schwellenwert ist, der basierend auf einem aktuellen Betriebszustand der Fahrzeugkombination (10) bestimmt wird.

**7.** Verfahren (100) nach Anspruch 6, wobei der aktuelle Betriebszustand der Fahrzeugkombination (10) eine Längsgeschwindigkeit der Fahrzeugkombination, eine Querbeschleunigung der Zugfahrzeugeinheit (12), eine Querbeschleunigung der nachlaufenden Einheit (14), einen Straßenradwinkel der Zugfahrzeugeinheit, einen Straßenradwinkel der nachlaufenden Einheit, ein Straßenprofil, und/oder einen Straßenoberflächenreibungskoeffizienten umfasst.

**8.** Verfahren (100) nach Anspruch 6 oder 7, wobei der Schwellenwert, $K_{us,i}^{threshold}$ , gegeben ist durch:

$$K_{us,i}^{threshold} = \left( A + B \cdot \min\left( \frac{\text{abs}(v_{ir})}{C}, 1 \right) \right) \cdot K_{us,i}^{model}$$

wobei A, B und C Konstanten sind, $v_{ir}$ die Längsgeschwindigkeit der Einheit ist, und $K_{us,i}^{model}$ ein modellierter Referenzwert für den Untersteuergradienten der Einheit ist.

**9.** Verfahren (100) nach Anspruch 6 oder 7, wobei der Schwellenwert, $K_{us,i}^{threshold}$ , gegeben ist durch:

$$K_{us,i}^{threshold} = \left( A + B \cdot \min\left( \frac{\text{abs}(a_{y,i})}{C \cdot g}, 1 \right) \right) \cdot K_{us,i}^{model}$$

wobei A, B und C Konstanten sind, $a_{y,i}$ die Querbeschleunigung der Einheit ist, g die Gravitationsbeschleunigung ist, und $K_{us,i}^{model}$ ein modellierter Referenzwert für den Untersteuergradienten der Einheit ist.

**10.** Verfahren (100) nach Anspruch 6 oder 7, wobei der Schwellenwert, $K_{us,i}^{threshold}$ , gegeben ist durch:

$$K_{us,i}^{threshold} = \left( A + B \cdot \min\left( \frac{\text{abs}(\delta_i)}{C}, 1 \right) \right) \cdot K_{us,i}^{model}$$

wobei A, B und C Konstanten sind, $\delta_i$ der Straßenradwinkel ist, und $K_{us,i}^{model}$ ein modellierter Referenzwert für den Untersteuergradienten der Einheit ist.

**11.** Verfahren (100) nach Anspruch 6 oder 7, wobei der Schwellenwert, $K_{us,i}^{threshold}$ , gegeben ist durch:

$$K_{us,i}^{threshold} = \left( A + B \cdot \min\left( \frac{\text{abs}(\gamma)}{C}, 1 \right) \right) \cdot K_{us,i}^{model}$$

wobei A, B und C Konstanten sind, $\gamma$ die Straßenneigung ist, und $K_{us,i}^{model}$ ein modellierter Referenzwert für den Untersteuergradienten der Einheit ist.

**12.** Verfahren (100) nach Anspruch 6 oder 7, wobei der Schwellenwert, $K_{us,i}^{threshold}$, gegeben ist durch:

$$K_{us,i}^{threshold} = \left( A + B \cdot min\left( \frac{abs(\mu)}{C}, 1 \right) \right) \cdot K_{us,i}^{model}$$

wobei A, B und C Konstanten sind, $\mu$ der Straßenoberflächenreibungskoeffizient ist, und $K_{us,i}^{model}$ ein modellierter Referenzwert für den Untersteuergradienten der Einheit ist.

**13.** Verfahren (100) nach einem vorhergehenden Anspruch, umfassend Bestimmen, dass ein Einknicken in der Fahrzeugkombination (10) vorhanden ist, falls der aktuelle Wert des Untersteuergradienten der Zugfahrzeugeinheit (12) jenseits des Schwellenwerts liegt.

**14.** Verfahren (100) nach einem vorhergehenden Anspruch, umfassend Bestimmen, dass Anhängerschwingen in der Fahrzeugkombination (10) vorhanden ist, falls der aktuelle Wert des Untersteuergradienten der nachlaufenden Einheit (14) jenseits des Schwellenwerts liegt.

**15.** Computerlesbares Medium, auf dem Anweisungen gespeichert sind, die, wenn sie durch einen oder mehrere Prozessoren ausgeführt werden, die Ausführung der Verfahrensschritte nach einem der Ansprüche 1 bis 14 veranlassen.

**Revendications**

**1.** Procédé (100) de détection d'une instabilité en lacet dans un ensemble de véhicules (10), l'ensemble de véhicules comprenant une unité tractrice (12) et au moins une unité tractée (14), le procédé comprenant :

- déterminer (102) une valeur actuelle d'un gradient de sous-virage d'au moins une unité de l'ensemble de véhicules ;
- comparer (104) la valeur actuelle du gradient de sous-virage à un seuil ; et
- si la valeur actuelle du gradient de sous-virage est au-delà du seuil, déterminer (106) qu'une instabilité en lacet est présente dans l'ensemble de véhicules ;
dans lequel le gradient de sous-virage, $K_{us,tractor}$, de l'unité tractrice est donné par :

$$K_{us,tractor} = \frac{v_{1,r} \tan \delta_1 - L_1 \omega_1}{V_{1,r}^2 \omega_1}$$

où $v_{1,r}$ est la vitesse longitudinale de l'unité tractrice, $\delta_1$ est l'angle de braquage des roues de route de l'unité tractrice, $L_1$ est l'empattement de l'unité tractrice, et $\omega_1$ est la vitesse de lacet du tracteur ; et/ou
le gradient de sous-virage, $K_{us,trailer}$, d'une unité tractée $i$ est donné par :

$$K_{us,trailer,i} = \frac{v_{i,r} \tan \theta_{i-1,i} - \left( L_i - \frac{b_{i-1}}{\cos \theta_{i-1,i}} \right) \omega_i}{v_{i,r}^2 \omega_i}$$

où $v_{i,r}$ est la vitesse longitudinale de l'unité tractée, $\theta_{i-1,i}$ est l'angle d'articulation entre l'unité tractée et l'unité située devant, $L_i$ est l'empattement de l'unité tractée, $b_{i-1}$ est la distance longitudinale depuis la position d'essieu arrière équivalente de l'unité jusqu'au point d'accouplement, et $\omega_i$ est la vitesse de lacet de l'unité tractée.

**2.** Procédé (100) selon l'une quelconque des revendications précédentes, dans lequel le seuil est déterminé sur la base d'une valeur modélisée du gradient de sous-virage, $K_{us,i}^{model}$.

3. Procédé (100) selon la revendication 2, dans lequel $K_{us,i}^{model}$ est donné par :

$$K_{us,i}^{model} = \frac{C_i \cdot l_r - C_{i-1} \cdot l_f^*}{C_i \cdot C_{i-1} \cdot L_i^*}$$

où $C_i$ est la rigidité de dérive utilisée pour l'unité $i$, $C_{i-1}$ est la rigidité de dérive utilisée pour l'unité $i$-$1$, $l_r$ est la distance depuis l'essieu arrière jusqu'au centre de gravité de l'unité, $l_f^*$ est la distance modifiée depuis le point d'accouplement jusqu'au centre de gravité de l'unité et $L_i^*$ est l'empattement modifié de l'unité.

4. Procédé (100) selon la revendication 2, dans lequel, pour une unité avec exactement deux groupes d'essieux $K_{us,i}^{model}$ est donné par :

$$K_{us,i}^{model} = \frac{C_r \cdot l_r - C_f \cdot l_f}{C_f \cdot C_r \cdot L}$$

où $C_r$ est la rigidité de dérive pour l'essieu arrière de l'unité, $C_f$ est la rigidité de dérive pour l'essieu avant de l'unité, $l_r$ est la distance depuis l'essieu arrière jusqu'au centre de gravité de l'unité, et $l_f$ est la distance depuis l'essieu avant jusqu'au centre de gravité de l'unité.

5. Procédé (100) selon l'une quelconque des revendications précédentes, dans lequel le seuil est un seuil fixe déterminé sur la base de données expérimentales et/ou d'un modèle d'apprentissage automatique.

6. Procédé (100) selon l'une quelconque des revendications précédentes, dans lequel le seuil est un seuil variable déterminé sur la base d'un état de fonctionnement actuel de l'ensemble de véhicules (10).

7. Procédé (100) selon la revendication 6, dans lequel l'état de fonctionnement actuel de l'ensemble de véhicules (10) comprend une vitesse longitudinale de l'ensemble de véhicules, une accélération latérale de l'unité tractrice (12), une accélération latérale de l'unité tractée (14), un angle de braquage des roues de route de l'unité tractrice, un angle de braquage des roues de route de l'unité tractée, un profil de route, et/ou un coefficient de frottement de surface de route.

8. Procédé (100) selon la revendication 6 ou 7, dans lequel le seuil, $K_{us,i}^{threshold}$, est donné par :

$$K_{us,i}^{threshold} = \left( A + B \cdot \min\left( \frac{\text{abs}(v_{ir})}{C}, 1 \right) \right) \cdot K_{us,i}^{model}$$

où A, B et C sont des constantes, $v_{ir}$ est la vitesse longitudinale de l'unité, et $K_{us,i}^{model}$ est une valeur de référence modélisée pour le gradient de sous-virage de l'unité.

9. Procédé (100) selon la revendication 6 ou 7, dans lequel le seuil, $K_{us,i}^{threshold}$, est donné par :

$$K_{us,i}^{threshold} = \left( A + B \cdot \min\left( \frac{\text{abs}(a_{y,i})}{C \cdot g}, 1 \right) \right) \cdot K_{us,i}^{model}$$

où A, B et C sont des constantes, $a_{y,i}$ est l'accélération latérale de l'unité, g est l'accélération gravitationnelle, et $K_{us,i}^{model}$ est une valeur de référence modélisée pour le gradient de sous-virage de l'unité.

**10.** Procédé (100) selon la revendication 6 ou 7, dans lequel le seuil, $K_{us,i}^{threshold}$, est donné par :

$$K_{us,i}^{threshold} = \left(A + B \cdot \min\left(\frac{\text{abs}(\delta_i)}{C}, 1\right)\right) \cdot K_{us,i}^{model}$$

où A, B et C sont des constantes, $\delta_i$ est l'angle de braquage des roues de route, et $K_{us,i}^{model}$ est une valeur de référence modélisée pour le gradient de sous-virage de l'unité.

**11.** Procédé (100) selon la revendication 6 ou 7, dans lequel le seuil, $K_{us,i}^{threshold}$, est donné par :

$$K_{us,i}^{threshold} = \left(A + B \cdot \min\left(\frac{\text{abs}(\gamma)}{C}, 1\right)\right) \cdot K_{us,i}^{model}$$

où A, B et C sont des constantes, $\gamma$ est la pente de route, et $K_{us,i}^{model}$ est une valeur de référence modélisée pour le gradient de sous-virage de l'unité.

**12.** Procédé (100) selon la revendication 6 ou 7, dans lequel le seuil, $K_{us,i}^{threshold}$, est donné par :

$$K_{us,i}^{threshold} = \left(A + B \cdot min\left(\frac{abs(\mu)}{C}, 1\right)\right) \cdot K_{us,i}^{model}$$

où A, B et C sont des constantes, $\mu$ est le coefficient de frottement de surface de route, et $K_{us,i}^{model}$ est une valeur de référence modélisée pour le gradient de sous-virage de l'unité.

**13.** Procédé (100) selon l'une quelconque des revendications précédentes, comprenant déterminer qu'une mise en portefeuille est présente dans l'ensemble de véhicules (10) si la valeur actuelle du gradient de sous-virage de l'unité tractrice (12) est au-delà du seuil.

**14.** Procédé (100) selon l'une quelconque des revendications précédentes, comprenant déterminer qu'une oscillation de remorque est présente dans l'ensemble de véhicules (10) si la valeur actuelle du gradient de sous-virage de l'unité tractée (14) est au-delà du seuil.

**15.** Support lisible par ordinateur ayant stockées sur celui-ci des instructions qui, lorsqu'elles sont exécutées par un ou plusieurs processeurs, provoquent l'exécution des étapes du procédé selon l'une quelconque des revendications 1 à 14.

FIG. 1

FIG. 2A

FIG. 2B

FIG. 3

19

**FIG. 4A**

**FIG. 4B**

**FIG. 5A**

**FIG. 5B**

**FIG. 6A**

**FIG. 6B**

100

Determining a current value of an understeering
gradient of at least one unit of the vehicle
combination
102

Comparing the current value to a threshold
104

Determining that a yaw instability is present in the
vehicle combination if the current value of the
understeering gradient is beyond the threshold
106

**FIG. 7**

810   820   830   840   850

| CPU(S) | Input Device(s) | Output Device(s) | Storage Device(s) | Computer Readable Storage Media Reader |

| Communication Systems | Processing Acceleration | Working Memory |

890

Operating System

Other Code (Programs)

888

884

860   870   880

800

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210396620 A1

**Non-patent literature cited in the description**

- **BENGT JACOBSON et al.** Vehicle Dynamics Compendium. Vehicle Dynamics Group, Division Vehicle and Autonomous Systems, Department of Mechanics and Maritime, Chalmers University of Technology